(19) Europäisches Patentamt

European Patent Office

Office européen des brevets

(11) **EP 4 485 277 B1**

(12) **EUROPEAN PATENT SPECIFICATION**

(45) Date of publication and mention of the grant of the patent:
**20.05.2026 Bulletin 2026/21**

(21) Application number: **23182538.1**

(22) Date of filing: **29.06.2023**

(51) International Patent Classification (IPC):
**G06N 3/0464** $^{(2023.01)}$

(52) Cooperative Patent Classification (CPC):
**G06N 3/0464; G06V 10/774; G06V 10/82; G06V 20/20; G06V 20/64; G06V 40/103;** G06N 3/049; G06N 3/08; G06V 2201/06

(54) **METHOD FOR GENERATING PROBABILISTIC REPRESENTATIONS AND DEEP NEURAL NETWORK**

VERFAHREN ZUR ERZEUGUNG PROBABILISTISCHER DARSTELLUNGEN UND TIEFES NEURONALES NETZWERK

PROCÉDÉ DE GÉNÉRATION DE REPRÉSENTATIONS PROBABILISTES ET RÉSEAU NEURONAL PROFOND

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**01.01.2025 Bulletin 2025/01**

(73) Proprietor: **TOYOTA JIDOSHA KABUSHIKI KAISHA**
**Toyota-shi, Aichi-ken, 471-8571 (JP)**

(72) Inventors:
• **GARATTONI, Lorenzo**
  **1140 Brussels (BE)**
• **FRANCESCA, Gianpiero**
  **1140 Brussels (BE)**
• **PINI, Stefano**
  **London, EC2A 3AH (GB)**
• **SIMONI, Alessandro**
  **41125 Modena (IT)**
• **VEZZANI, Roberto**
  **41125 Modena (IT)**
• **BORGHI, Guido**
  **47521 Cesena (IT)**

(74) Representative: **Cabinet Beau de Loménie**
**103, rue de Grenelle**
**75340 Paris Cedex 07 (FR)**

(56) References cited:
• **ALESSANDRO SIMONI ET AL: "Semi-Perspective Decoupled Heatmaps for 3D Robot Pose Estimation from Depth Maps", ARXIV.ORG, CORNELL UNIVERSITY LIBRARY, 201 OLIN LIBRARY CORNELL UNIVERSITY ITHACA, NY 14853, 6 July 2022 (2022-07-06), XP091266136**
• **ANGEL MART\'INEZ-GONZ\'ALEZ ET AL: "Real-time Convolutional Networks for Depth-based Human Pose Estimation", ARXIV.ORG, CORNELL UNIVERSITY LIBRARY, 201 OLIN LIBRARY CORNELL UNIVERSITY ITHACA, NY 14853, 30 October 2019 (2019-10-30), XP081523189, DOI: 10.1109/IROS.2018.8593383**

## Description

BACKGROUND OF THE INVENTION

1. Field of the Invention

The invention relates to the technical field of probabilistic representation generation, and in particular, to a method for generating probabilistic representations, a deep neural network, a computing system for key point prediction, a method for training the deep neural network, a method for developing the deep neural network, and a computer-readable storage medium.

2. Description of Related Art

The ability to estimate the three-dimensional (hereinafter "3D") pose of articulated objects underpins a wealth of real-world applications, such as those for autonomous systems. This ability is particularly crucial for ensuring the safety of workers who interact with collaborative robots in Industry 4.0. For example, accurate knowledge of the 3D locations of both workers and robots in industrial environments is instrumental in detecting unsafe situations and in facilitating collision avoidance.

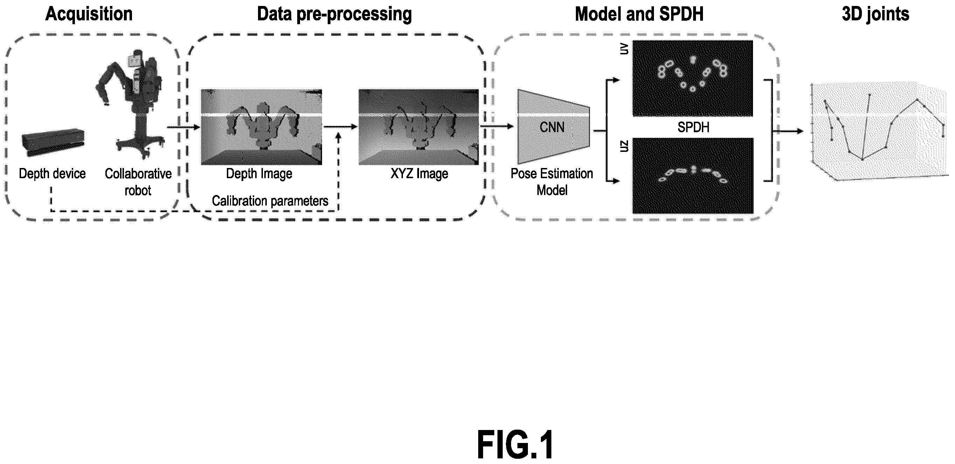

Alessandro Simoni et al., in their 2022 publication "Semi-Perspective Decoupled Heatmaps for 3D Robot Pose Estimation From Depth Maps", featured in IEEE Robotics and Automation Letters 7, pages 11569-11576, introduced a non-invasive, light-invariant system for 3D robot pose estimation (hereinafter "RPE"). This system operates by capturing a depth map of a 3D scene using a depth camera, converting this depth map to an XYZ image, and further processing the XYZ image to generate $uv$ and $uz$ heat maps for each robot joint in the scene. The system then leverages these heat maps to predict the 3D locations of the joints in the scene. Fig. 1 illustrates an overview of the 3D RPE system.

There is a need for a network structure that efficiently generates the semi-perspective decoupled heat maps (hereinafter "SPDHs").

SUMMARY OF THE INVENTION

The invention is defined by the appended claims. In a first aspect, the present disclosure provides a deep neural network, which is not only able to enhance the system described above, but also finds application in other scenarios requiring the generation of probabilistic representations, such as networks developed for two-dimensional (hereinafter "2D") human pose estimation.

The deep neural network includes branches configured to process features derived from a data representation of a 3D scene to generate different groups of probabilistic representations. Each of the different groups is associated with a different plane of a 3D space, and includes one or more of the probabilistic representations. Each of the branches includes one or more layers. The one or more layers of each branch are configured to process the derived features to generate one of the different groups, and include a different set of weights for generating the group of probabilistic representation(s).

A probabilistic representation in one of the different groups is configured to indicate probability that a projection of a target in the 3D scene onto the plane associated with the group falls within one or more locations of the plane. However, it is important to note that this merely signifies that one or more probabilities indicated by the probabilistic representation are equivalent to or can be thought of as such probability, and does not imply that the generation of the probabilistic representation or any method step according to different embodiments of the disclosure necessarily involves a projection process.

In the context of neural networks, the term "branches" refers to separate paths within the network architecture, each consisting of one or more layers performing different series of transformations on input data of the branches. In other words, a branch is a segment of the architecture where the data flow diverges, going through different layers before potentially converging again later.

As such, by definition, each layer of the branches includes a different group of nodes or "neurons".

The multi-branch architecture of the deep neural network facilitates the learning of distinct features associated with the different groups of probabilistic representations, demonstrating superior performance in prediction accuracy compared to other network structures, thereby enabling the development of possible future collision-avoiding systems in the industrial context.

Examples of the probabilistic representations include heat maps, probability density functions, histograms, contour plots, Bayesian networks, confidence intervals, credible intervals, etc. Each element of the probabilistic representation (e.g., each pixel of a heat map) may contain a value between 0 and 1 of a 2D Gaussian distribution, representing the likelihood of a target being represented by that element.

The 3D scene may be a real-world environment, or a digital environment that represents a 3D space and object(s) within it such as a synthesized environment that simulates a real-world environment.

Moreover, the target may be an entity such as a human, an animal or a robot. Or, the target may be a key part of such an entity. Information associated with the key part, such as angle and location, may be used to represent the pose of the entity. Examples of such a key part include so-called "joints" in the context of human/robot pose estimation, which are key body parts for constructing a skeletal representation of the human/robot body.

Examples of the data representation include an image such as an RGB image, a point cloud, a 3D mesh, an array including sensor readings, etc. In particular, the data representation may be a 2D data representation such as a 2D array or a 2D image.

The following examples could improve the accuracy and/or efficiency of 3D pose estimation from the data representation.

In an example, the data representation may include depth information. For example, the data representation may include a depth image, a stereo image, or an RGB-D image. Accordingly, the different groups of probabilistic representations could be intrinsically connected to the depth information to facilitate accurate estimation of poses of the entity. The use of depth data could reduce the domain gap between synthetic and real data without domain randomization or similar techniques.

In another example compatible with any other example herein, the 3D scene includes one or more targets. As such, for each of the one or more targets, the data representation includes a representation or depiction of the target. Each probabilistic representation in one or each of the groups may be configured to indicate probability that a projection of one of the one or more targets to the plane associated with the group lies in one or more locations of the plane.

The 3D space may include the 3D scene. In still another example compatible with any other example herein, the data representation is an image, and the 3D space may be a view space of an image acquisition device, which may be an actual physical device or a virtual/simulated device. Examples of the image acquisition device include cameras, depth sensors, etc.

Accordingly, the different planes may include the image plane of the image acquisition device (e.g., the *uv* plane defined in the SPDH paper), and/or a plane containing an axis of the view space that is perpendicular to the image plane, such as the plane which contains the horizontal axis of the view space and is perpendicular to the image plane (e.g., the *uz* plane in the SPDH paper).

In computer graphics and vision, the term "view space", also referred to as "camera space", "sensor space", or "eye space," is used to denote a 3D space observed from a position and orientation of an image acquisition device. A position and orientation of a camera is also referred to as "a camera pose". This 3D space is described/defined using a 3D coordinate system where the optical center of the image acquisition device is at the origin and the three mutually perpendicular coordinate axes (X, Y, and Z) of the coordinate system are defined based on the image acquisition device's orientation, which may refer to the combination of rotations (yaw, pitch, and roll) that determine the specific positioning of the camera's optical axis in 3D space. Typically, the Z-axis points in the direction the image acquisition device is looking, the X-axis is horizontal, and the Y-axis is vertical.

The image plane of an image acquisition device is a conceptual geometric plane used to define how an 3D scene is projected into a 2D image. This plane is usually positioned in front of the image acquisition device (specially, a distance away that is defined by the focal length).

The optical center of the device and the image plane constitute a projective model where 3D points in the scene are projected onto the image plane. Each pixel in the image corresponds to a specific point on the image plane.

As can be appreciated, the image, which is the data representation in this example, also represents the 3D scene from a particular position and a particular direction, such as from a particular position and orientation of an image acquisition device. For instance, the position and direction from which the image represents the 3D scene may be the same as the position and orientation from which the view space is observed.

In still another example compatible with any other example herein, the projection is a perspective projection. Accordingly, the target can be thought of as being projected onto the plane along one or more lines that converge at a single point called the center of projection, which may be the optical center of an image acquisition device. The probabilistic representations in the same group may have the same conceptualized center of projection, and probabilistic representations in different groups may have different conceptualized centers of projection. Further, the centers of projection of different groups may have the same position and projection direction with respect to the respective planes.

In still another example compatible with any other example herein, the deep neural network further includes a backbone connected to the branches. The backbone is configured to derive the features from the data representation. In other words, the backbone takes the data representation as an input. This could reduce the computational resources and time required for the derivation of the features.

The backbone may be any neural network architecture that can be trained to predict the different groups of probabilistic representations. For example, it may include multiple convolutional layers for extracting the features from the data representation, and/or, it may include the backbone of a pose estimation model such as a human pose estimation model. An example of the backbone is the main body of a high-resolution net (hereinafter "HRNet") except for the final convolution, such as the one introduced by Ke Sun et al., in their paper "Deep High-Resolution Representation Learning for Human Pose Estimation" in 2019 IEEE/CVF Conference on Computer Vision and Pattern Recognition ("CVPR"). Other examples of the backbone include the Stacked Hourglass Networks introduced by Alejandro Newell et al. in their paper "Stacked Hourglass Networks for Human Pose Estimation" in 2016 European Conference on Computer Vision, the Transpose model introduced by Sen Yang et al. in their paper "TransPose: Keypoint Localization via Transformer" in 2021 IEEE/CVF International Conference on Computer Vision ("ICCV"), and the UniFormer model introduced by Kunchang Li et al. in their 2022 paper "UniFormer: Unified Transformer for Efficient Spatiotemporal Representation Learning", ar-

Xiv:2201.04676.

In particular, the width of the backbone, which refers to the number of channels in each convolutional layer, may be equivalent to the number of probabilistic representations to be generated by the branches.

In still another example compatible with any other example herein, the value of each element of the data presentation includes 3D spatial coordinates of a point/part in the 3D scene that is represented by the element. In particular, the data representation may be image, and the elements are pixels.

In still another example compatible with any other example herein, at least one of the branches includes a residual block. A residual block refers to a set of layers where the input to the block - following necessary transformation to match the output's dimensions, if they are different - is added to the output of the block. This mechanism helps to alleviate the vanishing gradient problem in deep networks. It was first introduced by Kaiming He et al in their 2016 paper "Deep residual learning for image recognition" in Proceedings of the IEEE conference on computer vision and pattern recognition (pp. 770-778).

The residual block may include normalization and/or activation layer(s). Examples of the normalization function include group normalization, instance normalization, or batch normalization such as 2D batch normalization. Examples of the activation function include rectified linear unit ("ReLU"), Leaky ReLU, or Gaussian error linear unit ("GeLU").

In still another example compatible with any other example herein, the 3D scene includes multiple targets, and at least one of the branches includes a final convolutional layer having a channel dimension (i.e., the number of channels in the layer) equivalent to the quantity of the targets. The final convolutional layer may be connected to the residual block.

In a second aspect, the present disclosure provides a computing system for estimating a location of a target. The computing system includes the deep neural network as described above, and a prediction module. The prediction module is configured to predict 3D spatial coordinates or 2D coordinates of the target based on probabilistic representations each belonging to a different one of the groups, or to predict 2D coordinates of the target based on a probabilistic representation of one of the groups.

The 3D spatial coordinates may be defined in the 3D scene. For example, the 3D spatial coordinates may be 3D world coordinates in the world coordinate system, which is a global reference frame. Alternatively, the 3D coordinates may be defined in the camera space corresponding to the data representation.

On the other hand, the 2D coordinates may be defined in the original 2D data representation or in another 2D data representation generated from the original data representation. The 2D coordinate system used in the original 2D data representation may be consistent or align with the 3D coordinate system in the camera space. For example, the 2D coordinates of the target in the original 2D data representation may be predicted using the probabilistic representation of the group associated with the image plane. Or, the 2D coordinates of the target in a 2D image rendered from a different camera pose than that of the original data representation may be predicted by first estimating the 3D coordinates of the target based on the probabilistic representations each from a different group, and then projecting the 3D coordinates back onto the 2D image plane using camera intrinsic parameters.

For other implementation examples of the second aspect, please refer to the first aspect.

In a third aspect, the present disclosure provides a method for generating probabilistic representations. The method includes an operation of using the branches of the deep neural network as described above to process features derived from a data representation of a 3D scene to generate different groups of probabilistic representation, where the one or more layers in each of the branches process the features to generate one of the different groups.

In an example that is compatible with any other example disclosed herein, the method further includes an operation of predicting 3D spatial coordinates or 2D coordinates of the target based on probabilistic representations each belonging to a different one of the groups.

In another example that is compatible with any other example disclosed herein, the method further includes an operation of using the backbone of the deep neural network to derive the features from the data representation.

For other implementation examples of the third aspect, please refer to the first aspect.

In a fourth aspect, the present disclosure provides a method for training the deep neural network as described above. The method includes an operation of training the branches of the deep neural network using features derived from a synthetic data representation that includes depth information as input of the branches, or an operation of training the branches using features derived from data representations that represent movements of robot arms as input of the branches.

By definition, the synthetic data representation is not collected from the real world. For instance, the synthetic data representation may be collected in a virtual environment, or generated through simulation or other artificial means. The synthetic data representation may be an image representing a 3D scene that includes one or more targets. In particular, the branches may be trained using features derived only from synthetic data representations.

Using the synthetic data representation during training avoids the time-consuming acquisition and annotation procedures, and makes the deep neural network independent of the type of depth sensor.

On the other hand, the data representations that represent movements of robot arms may be collected using a real depth sensor in the real world, or may be synthetic. These data representations may include depth information. Such data representations represent new challenging real-world scenes which are rarely included in existing training process.

Furthermore, the use of depth data could reduce the domain gap between synthetic and real data without domain randomization or similar techniques.

In particular, the synthetic data representation and/or the data representations may only contain depth data. That is, information about the depth of various points in a 3D scene. It does not include information about the color or texture of those points. For example, the synthetic data representation may be a depth map. Using only depth data to training the deep neural network can lead to two main advantages: i) it provides information for a more accurate estimation of real-world 3D coordinates, and, ii) it avoids illumination issues that typically affect system based, for instance, on RGB data.

In an example that is compatible with any other example described herein, the derivation process of the features from the synthetic data representation includes converting the synthetic data representation to a training data representation and then deriving the features from the training data representation. In this scenario, the training data representation, rather than this synthetic data representation, may be input into the backbone of the deep neural network to extract the features. For instance, both the training data representation and the synthetic data representation are images, and the value of each pixel in the training image may include 3D spatial coordinates of a point in a 3D scene that is represented by that pixel. Further, the synthetic image may be converted to a point cloud, which is in turn projected to the 2D image plane of the training image.

In another example that is compatible with any other example described herein, the method further includes an operation of generating the synthetic data representation by applying data augmentation on a point cloud computed from another data representation that includes depth information. This could enrich the training dataset and make the deep neural network more resilient to variations in viewpoints between the training and test data sets, thereby improving the performance of the deep neural network. The point cloud may be computed using both the intrinsic camera parameters corresponding to the other data representation and the depth information. The other data representation may be a real image that is acquired in the real world by using a depth sensor, or a synthetic image.

For instance, the data augmentation includes rotating the point cloud around one axis of a 3D coordinate system which the point cloud is in, and/or, translating the point cloud along two axes of the 3D coordinate system.

In particular, the 3D coordinate system may be the one that defines a view space of an image acquisition device. The point cloud undergoes a rotation operation around the axis that is aligned with the direction in which the image acquisition device is looking (typically the Z-axis). This rotation simulates the effect of the image acquisition device rotating, while the point cloud remains stationary in the world space. This could change the angle at which the 3D points in the point cloud are viewed. And/or, the point cloud undergoes a translation operation along two axes: one is the axis aligned with the direction in which the image acquisition device is looking (typically the Z-axis in forward/backward direction), and the other is a horizontal axis perpendicular to this direction from the image acquisition device's point of view (typically the X-axis in side-to-side direction). This translation simulates the effect of the image acquisition device moving horizontally and forward/backward, while the point cloud remains stationary in world space. This could change the position at which the points in the point could are viewed without altering their apparent height.

Alternatively or additionally to the example above, the generation of the synthetic data representation may include an operation of introducing noise and/or a dropout of one or more portions to another data representation that includes depth information. The other data representation may be a real image or a synthetic image. The noise and dropout may simulate respectively the noise of a real sensor and the hole(s) caused by light on reflective surfaces (e.g., metallic objects or screens) that usually produce invalid depth measurements, result in a more realistic simulation of real-world conditions.

In particular, the dropout may be random and/or include a rectangular area or rectangular areas of different dimensions, where pixels in each rectangular area are set o 0 value. The noise may be pixel-wise pepper noise.

In a fifth aspect, the present disclosure provides a method for developing the deep neural network as describe above in relation to the first aspect. The method includes the training method as described above in relation to the fourth aspect, and an operation of evaluating performance of the deep neural network using features derived from a real data representation that includes depth information and is acquired from a real environment. For example, the real data representation may be acquired using a depth sensor in a real environment.

As such, the deep neural network may be trained only on synthetic depth data, easily obtainable with simulators, and tested on real sequences. The inventors observe that this scenario limits the difficulties in acquiring a large amount of varied and labeled depth data usually required to train deep learning-based systems. Besides, in this manner, the training procedure and then the method deployment are not tied to a specific acquisition depth device and its technology, which can introduce artifacts in the depth data, limiting generalization capabilities. Furthermore, using real data (or a combination of synthetic and real data) to evaluate the performance of the deep neural network allows rigorous evaluation of the model's performance and its ability to generalize to real-world scenarios.

In particular, the derivation of the features from the real data representation may include an operation of converting the real data representation to a testing data representation, and an operation of deriving the features from the testing data representation. For instance, both the testing data representation and the real data representation are images, and the value of each pixel in the testing image may include 3D spatial coordinates of a point in a 3D scene that is represented by that pixel. Further, the real image may be converted to a point cloud, which is in turn projected to the 2D image plane of the training image.

Further, the performance of the deep neural network may be evaluated by using features derived from real data representations that represent movements of robot arms.

In a sixth aspect, the present disclosure provides another computing system. The computing system includes one or more processors, and one or more storage media storing instructions which, when executed by the one or more processors, enable the one or more processors to implement the method for generating probabilistic representations according to the third aspect, the training method according to the fourth aspect, or the method for developing the deep neural network according to the fifth aspect.

In a seventh aspect, the present disclosure provides a computer-readable storage medium. The computer readable storage medium stores the deep neural network according to the first aspect. In particular, the storage medium may store the deep neural network configuration, which refers to the structural and operational details of the network, such as one or more of: the number of layers in the network, the number of nodes or units in each layer, the type of layers used (for instance, convolutional, recurrent, fully connected, etc.), the activation functions used in the nodes, parameters related to the training process, like learning rate, batch size, the details of any regularization techniques used, etc. Alternatively or additionally, the storage medium may include the weights (and biases, if any) of the network, which are learned parameters during the training process that enable to network to make accurate predictions.

Or, the computer readable storage medium stores instructions which, when executed by one or more processors, enable the one or more processors to implement the method for generating probabilistic representations according to the third aspect, the training method according to the fourth aspect, or the method for developing the deep neural network according to the fifth aspect.

This instructions can use any programming language and take the form of source code, object code or a code intermediate between source code and object code, such as a partially compiled form, or any other desirable form.

The above-described aspects of the present disclosure can take the form of an entirely hardware embodiment, an entirely software embodiment (including firmware, resident software, micro-code, and so forth), or an embodiment combining software and hardware aspects. In this context, the term "module" herein can refer to a software component, a hardware component, or a combination of software and hardware components.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 illustrates an overview of an existing 3D RPE system;
FIG. 2 illustrates an overview of a deep neural network according to a specific example of a first embodiment of the present disclosure;
FIG. 3 illustrates 16 joints on the BAXTER™ robot by Rethink Robotics™ according to various embodiments of the present disclosure;
FIG. 4 is a schematic work flow of a method for estimating the 3D pose of a robot according to a specific example of a second embodiment of the present disclosure;
FIG. 5 is a schematic block diagram of a computing system according to a specific example of a third embodiment of the present disclosure;
FIG. 6 is a schematic work flow of a method for training the deep neural network according to a specific example of a fourth embodiment of the present disclosure; and
FIG. 7 is a schematic block diagram of another computing system according to a fifth embodiment of the present disclosure.

DETAILED DESCRIPTION OF EMBODIMENTS

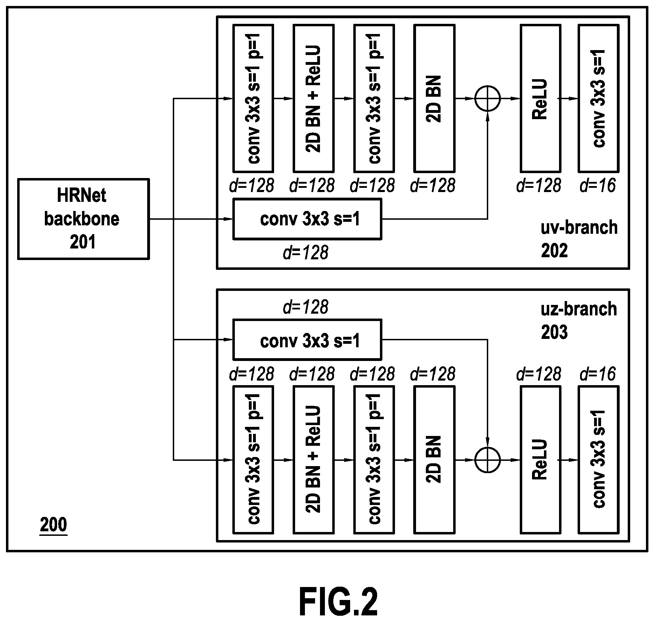

A specific example of a deep neural network according to a first embodiment of the present disclosure is illustrated by Fig. 2. This particular deep neural network, denoted as "200", includes a backbone 201, a uv-branch 202 and a uz-branch 203.

The backbone 201 includes the four stages of the main body of an HRNet-32 except for the final convolution. HRNet-32 specifically refers to a variant of the original HRNet where the number of channels in the convolutional layers is set to 32. Each branch 202, 203 consists of both a residual block with 128-dimensional convolutional layers, batch normalization and ReLU activations, and a final convolutional layer that predicts the heat maps, reducing the channel dimension to 16, i.e. the number of robot joints. A 3×3 filter or kernel is used in each of the convolutional layers, and the stride (i.e., the number of pixels by which the filter or kernel moves during the convolution operation) for each convolutional layer is 1. For each convolutional layer in the residual block, the padding size is 1. The batch normalization layers apply batch normalization on 2D input data, and the first 2D batch normalization layer is followed by a ReLU activation layer.

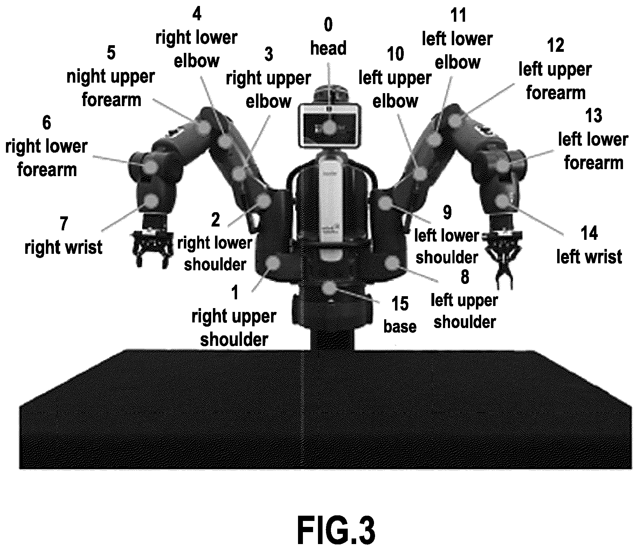

Fig. 3 illustrates 16 joints on the BAXTER™ robot by Rethink Robotics™ as an example.

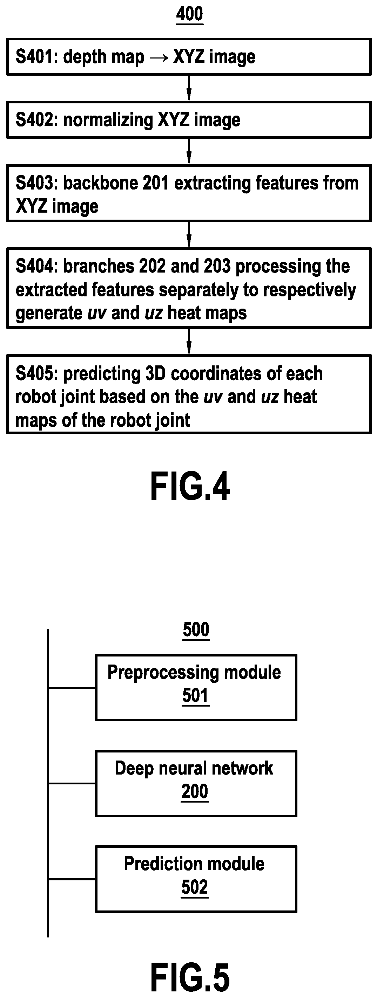

A second embodiment of the present disclosure provides a method for estimating the 3D pose of a robot using the deep neural network according to the first embodiment. The work flow 400 of a specific example of the second embodiment is illustrated by Fig. 4.

At step S401, an input depth map is first converted in the XYZ representation. The depth map can be defined as $D_M = \langle D, K \rangle$, where $D$ is the measured matrix of distances $d_{ij}$ between the acquisition device and the points in the scene, and $K$ is the perspective projection matrix, obtained as the intrinsic parameters of the depth camera. In this example, $K$ or the intrinsic parameters include the focal length of the camera $f$ and the principal point $c$. This principal point $c$ typically refers to the point on the image plane onto which the perspective center is projected. It does not represent the position of the optical center in 3D space, and it does not include orientation information.

It is worth noting that the maximum acquisition range of a real depth map relies on the technology used, and on the specific sensor quality and resolution. As such, $d_{ij}$ is defined in the range [$r$, R], where $r$ and $R$ are respectively the minimum and the maximum measurable ranges. The input depth map is transformed into an XYZ image, denoted as $I_D^{1 \times H \times W} \rightarrow I_{XYZ}^{3 \times H \times W}$. This denotes a conversion from a single-channel depth map to a three-channel XYZ image, which is a 2D representation mathematically defined as follows:

$$I_{XYZ} = \pi(D \cdot K^{-1}). \ (1)$$

Here, $\pi$ denotes the projection in the 3D space of every depth value $d_{ij}$, using the inverse of the projection matrix $K$. As a result, each pixel of the XYZ image corresponds to the projection in the camera space of its corresponding pixel in the original depth map, and contains the 3D coordinates of a point in the camera space that is represented by the pixel. The motivation for using this XYZ representation lies in its ability to minimize the disparity between synthetic and real depth data, thereby improving the performance of the model with the simulation-to-reality ("Sim2Real") scenario.

Then at step S402, the XYZ image is normalized independently along the three axes X, Y, Z, before being processed by the network 200.

At step S403, the HRNet-32 backbone 201 takes the normalized XYZ image as input and extracts a set of visual features. At step S404, the two branches 202 and 203 process the extracted set of visual features separately. The output of each branch is an SPDH representation (defined in the SPDH paper, as referenced in the background section herein), or a heat map for each robot joint in the $uv$ or $uz$ plane. That is, the two representations decompose the camera space into two bi-dimensional spaces where the robot joint locations are represented as heat maps: (i) the $uv$ space corresponding to the camera image plane, and (ii) the $uz$ space, containing quantized values of the Z dimension of the camera space. The first space represents the front view of the 3D scene in which the heat maps $H^{uv}$ are computed with a perspective awareness of the distance of the joints with respect to the camera. Indeed, smaller Gaussians are obtained for the farthest joints in order to force the network to focus on those locations that are usually more difficult to predict. On the other hand, the latter space is a bird-eye view of the scene in which the heat maps $H^{uz}$ are obtained from a quantized portion of the Z dimension of size defined as:

$$z = \frac{\bar{Z}_{max} - \bar{Z}_{min}}{\Delta Z} \ (2)$$

where $\bar{Z} = \{\bar{Z}_i \in Z; \bar{Z}_{min} \leq \bar{Z}_i \leq \bar{Z}_{max}\}$.

At step S405, the output of each branch is processed to compute the 3D robot skeleton. For each heat map $H^{uv}$ in the $uv$ space, the coordinates $\hat{X}\hat{Y}$ of the pixel in the heat map that represent the corresponding robot joint are computed by finding the pixel coordinates of the argmax and then multiplying them by the inverse of the camera intrinsics $K$. On the other hand, for each heat map $H^{uz}$ in the $uz$ space, the depth coordinate $\hat{Z}$ that represents the corresponding robot joint is computed by finding the pixel coordinate of the argmax and then converting it into a continuous value using the equation $\hat{Z} = (z_{max} \cdot \Delta Z) + \bar{Z}_{min}$. The final 3D position of the robot point $\hat{P}$ is obtained by multiplying the $\hat{X}\hat{Y}$ coordinates from the $uv$ space and sthe $\hat{Z}$ coordinate from the $uz$ space. This process is also described in the SPDH paper.

A third embodiment of the present disclosure provides a computing system for implementing the method according to the second embodiment. Fig. 5 illustrates a specific example of the computing system, denoted as "500". The computing system 500 includes a preprocessing module 501 configured to perform the steps S401 and S402, the deep neural network 200, and a prediction module 502 configured to perform the step S405 of predicting 3D coordinates of each robot joint based on the $uv$ and $uz$ heat maps of the robot joint.

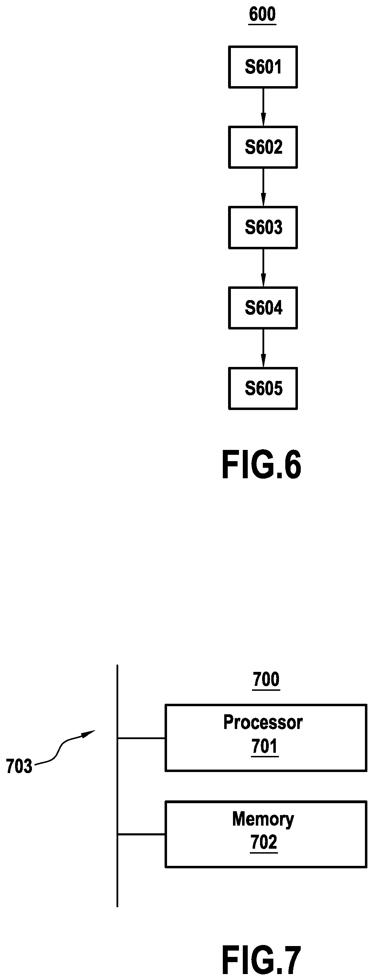

A fourth embodiment of the present disclosure provides a method for training the deep neural network according to the first embodiment. Fig. 6 illustrates the work flow 600 of a specific example of the fourth embodiment.

At step S601, synthetic and real depth maps $D_M$ are acquired.

The synthetic sequences may be collected in a virtual environment using Gazebo simulator for physical simulation and robot operating system ("ROS") for operating the synthetic robot model. The simulation may consist of two runs with different random initialization containing 20 different camera poses from which the robot is recorded at 10 fps while performing 10 pick-n-place motions. The recordings may be taken from three anchor cameras that are randomly positioned within a sphere of 1m diameter. The movements cover most of the working space at the front of the robot. This guarantees enough variation of the joint's positions for the training phase. The synthetic data may contain a total of 400 sequences containing 350k RGB-D frames with annotations for 16 joints, pick-n-place locations, and camera positions.

The real sequences may be acquired with the Microsoft Kinect Xbox One time-of-flight sensor, using ROS for recoding the robot movements. The camera may be placed in three anchor positions (center, left, right), so that they are within the space of the synthetic cameras, but not at the same exact location. Sequences with both single-arm movements and double-arm movements of the robot may be acquired. The former may contain 20 sequences at 15 fps from each camera position with pick-n-place motions with either the left or the right arm. The latter may consist of 10 sequences at 15 fps from each camera position with both robot arms moving.

At step S602, pixel-wise pepper noise and a random dropout of portions are introduced to at least some of the depth maps $D_M$. The pepper noise may be introduced for 10-15% of the pixels, and the random dropout may consist of rectangular areas of different dimensions where pixels are set to 0 values, so as to simulate respectively the noise of the real sensor and the holes caused by light on reflective surfaces (e.g., metallic objects or screens) that usually produce invalid depth measurements.

At step S603, point clouds are computed for the depth maps. At step S604, data augmentation is applied on at least some of the point clouds. In particular, 3D points of each point cloud are rotated of [-5°, +5°] on XY axes and translated of [-8cm, +8cm] on XZ axes, changing implicitly the camera pose.

At step S605, the point clouds are converted to XYZ images. At step S606, the XYZ images are input into the deep neural network 200 to train it.

In particular, if the deep neural network 200 is trained for 2D RPE, then the percentage of correct keypoints ("PCK") metric is used, which refers to the percentage of predicted joints that are within a certain distance threshold with respect to the ground truth. The PCK was proposed by Mykhaylo Andriluka et al. in their 2014 publication "2D Human Pose Estimation: New benchmark and state of the art analysis" in Proceedings of the IEEE Conference on computer Vision and Pattern Recognition. The PCK may be computed with a confidence threshold of 0.5 and a margin error of 2.5 pixels for the synthetic data set and {2.5, 5, 10} pixels for the real dataset. Moreover, the average pixel error over all robot joints may be computed.

If the deep neural network 200 is trained for 3D RPE, then the average distance metric ("ADD") is used, which is the mean L2 distance expressed in centimeters of all 3D robot joints to their ground truth positions. The ADD was proposed by Yu Xiang et al. in their 2018 publication "PoseCNN: A Convolutional Neural Network for 6D Object Pose Estimation in Cluttered Scenes" in *Robotics: Science and Systems*, and by Timothy E. Lee et al. in their 2020 publication "Camera-to-robot pose estimation from a single image" in Proc. IEEE Int. Conf. Robot. Autom., pp. 9426-9432. The value of the ADD (the lower the better) is useful to condense the error related to the translation and rotation in the 3D world. In addition, a mean average precision (the higher the better) is used as the accuracy on the ADD using different thresholds of {2, 4, 6, 8, 10} centimeters. In this way, results can be evaluated at different distances from the ground truth, giving more interpretability to the actual performance of the methods.

The performance of the deep neural network may be evaluated using both real and synthetic data. In particular, the real data may depict double-arm movements.

A fifth embodiment of the present disclosure provides another computing system for implementing the method according to the second or fourth embodiment. As illustrated by Fig. 7, the computing system 700 includes one or more processors represented by the processor 701, and one or more computer-readable storage media represented by the storage medium 702. The one or more storage media store instructions which, when executed by the one or more processors, cause the one or more processors to perform the method according to the second or fourth embodiment. As can be appreciated, the system 700 may be the same as the system 400.

Examples of the processor 701 include a central processing unit (hereinafter "CPU"), a vision processing unit (hereinafter "VPU"), a graphics processing unit (hereinafter "GPU"), a tensor processing unit (hereinafter "TPU"), a neural processing unit (hereinafter "NPU"), a neural processing engine, a core of a CPU, VPU, GPU, TPU, NPU or another processing device, an application processor, a display controller, an application specific integrated circuit (hereinafter "ASIC"), a field programmable gate array (hereinafter "FPGA"), a coprocessor, or any other hardware configured to function as a processing unit.

The storage medium 702 can be any available medium that can be accessed by the computing system 700 in the form of volatile or non-volatile memory. Examples of the storage medium 702 includes a random access memory (hereinafter "RAM"), a dynamic random access memory (hereinafter "DRAM"), a static random access memory (hereinafter "SRAM"), any other form of volatile memory known in the art, a magnetic hard disk, an optical disk, a floppy disk, a flash memory, an electrically programmable memory (hereinafter "EPROM"), an electrically erasable and programmable memory (hereinafter "EEPROM"), any other form of non-volatile memory known in the art, a data server, etc.

As shown by FIG. 7, the one or more processors 701 and the one or more storage media 702 may be directly or indirectly coupled to each other physically, communicatively, or operationally via a communication channel 703. The communication channel 703 may include one or more buses (such as an address bus, data bus or combination thereof), a network connection, an inter-process communication data structure, or any other means for communicating data.

The computing system 700 may include a high-performance computer, a server, a user device (e.g., a laptop computer, a home desktop computer, a mobile device such as a tablet, a smart phone, a wearable device, etc.), an embedded device (e.g., a device embedded within a vehicle, a camera, an image sensor, a household appliance, etc.), a platform having one or more corresponding application programming interfaces (hereinafter "APIs"), a cloud infrastructure, or any other computing device suitable for perform one or more steps of the method 700 according to the second or fourth embodiment.

A sixth embodiment of the present disclosure provides the computer storage medium 702.

**Claims**

1. A computer-implemented method for generating probabilistic representations, comprising:

   deriving, using a backbone (201) of a deep neural network (200), features from a data representation of a three-dimensional "3D" scene comprising one or more targets;
   processing (S404), using branches (202, 203) of the deep neural network (200) that are connected to the backbone (201), the features to generate different groups of probabilistic representations; and
   predicting (S405) 3D spatial coordinates of each of the one or more targets based on probabilistic representations each belonging to a different one of the groups,
   wherein each of the branches (202, 203) comprises one or more layers that comprise a different set of weights for generating one of the different groups from the features,
   each of the groups is associated with a different plane of a 3D space comprising the 3D scene and comprises one or more probabilistic representations,
   each probabilistic representation in each of the groups indicates probability that a projection of one of the one or more targets to the plane associated with the group lies in one or more locations of the plane, and
   the one or more targets comprise at least one entity or at least one key part of an entity.

2. The method according to claim 1, wherein one of the one or more targets is a key body part of a robot, or, a value of an element of the data representation comprises 3D spatial coordinates of a part in the 3D scene that is represented by the element.

3. The method according to claim 1 or 2, wherein at least one of the branches (202, 203) comprises a residual block.

4. The method according to any one of the claims 1 to 3, wherein the 3D scene comprises the targets, and at least one of the branches further comprises a final convolutional layer having a channel dimension equivalent to a quantity of the targets.

5. The method according to any one of the claims 1 to 4, wherein the data representation is an image, the 3D space is a view space of an image acquisition device, and the different planes comprise an image plane of the image acquisition device, and a plane containing an axis of the view space that is perpendicular to the image plane.

6. A deep neural network apparatus (200) for a computing system that is configured to predict three-dimensional "3D" spatial coordinates of each of one or more targets in a 3D scene based on probabilistic representations each belonging to a different group of probabilistic representations, the deep neural network implemented on a computer comprising:

   a backbone (201) configured to derive features from a data representation of the 3D scene, the one or more targets comprising at least one entity or at least one key part of an entity; and
   branches (202, 203) connected to the backbone (201), configured to process the features to generate the different groups of probabilistic representations, wherein
   each of the branches (202, 203) comprises one or more layers that comprise a different set of weights for generating one of the different groups from the features,
   each of the groups is associated with a different plane of a 3D space comprising the 3D scene and comprises one or more probabilistic representations, and
   each probabilistic representation in each of the groups is configured to indicate probability that a projection of one of the one or more targets to the plane associated with the group lies in one or more locations of the plane.

7. A computing system for estimating one or more locations of one or more targets, comprising:

the deep neural network (200) according to claim 6; and
a prediction module (502) configured to predict 3D spatial coordinates of each of the one or more targets based on probabilistic representations each belonging to a different one of the groups.

8. A computer-implemented method for training the deep neural network (200) according to claim 6, comprising:
inputting (S606), features derived from a synthetic data representation that comprises depth information or features derived from data representations that represent movements of robot arms, to the branches of the deep neural network to train the branches.

9. The method according to claim 8, further comprising:
generating the synthetic data representation by applying (S604) data augmentation on a point cloud computed (S603) from another data representation comprising depth information.

10. The method according to claim 9, wherein the data augmentation comprises:

rotating the point cloud around one axis of a 3D coordinate system that the point cloud is in; and/or
translating the point cloud along two axes of the 3D coordinate system.

11. The method according to any one of the claims 8-10, further comprising:
generating the synthetic data representation by introducing (S602) noise or a dropout of one or more portions to another data representation comprising depth information.

12. A computer-implemented method for developing the deep neural network according to claim 6, comprising:

training the deep neural network using the method according to any one of the claims 8 to 11; and
evaluating performance of the deep neural network using features derived from a real data representation that comprises depth information and is acquired from a real environment.

13. A computer-readable storage medium, storing the deep neural network (200) according to claim 6, or storing instructions which, when executed by one or more processors (701), enable the one or more processors (701) to implement the method according to any one of the claims 1 to 5, the method according to any one of the claims 8-11, or the method according to claim 12.

**Patentansprüche**

1. Computerimplementiertes Verfahren zum Generieren probabilistischer Darstellungen, umfassend:

Ableiten, unter Verwendung eines Backbones (201) eines tiefen neuronalen Netzwerks (200), von Merkmalen aus einer Datendarstellung einer dreidimensionalen (3D-) Szene, die ein oder mehrere Ziele umfasst;
Verarbeiten (S404), unter Verwendung von Verzweigungen (202, 203) des tiefen neuronalen Netzwerks (200), die mit dem Backbone (201) verbunden sind, der Merkmale, um verschiedene Gruppen probabilistischer Darstellungen zu generieren; und
Vorhersagen (S405) von 3D-Raumkoordinaten jedes des einen oder der mehreren Ziele auf der Grundlage probabilistischer Darstellungen, die jeweils zu einer anderen der Gruppen gehören, wobei jede der Verzweigungen (202, 203) eine oder mehrere Schichten umfasst, die einen anderen Satz von Gewichten umfassen, um eine der verschiedenen Gruppen aus den Merkmalen zu generieren,
wobei jede der Gruppen mit einer anderen Ebene eines 3D-Raums verknüpft ist, der die 3D-Szene umfasst, und eine oder mehrere probabilistische Darstellungen umfasst,
wobei jede probabilistische Darstellung in jeder der Gruppen eine Wahrscheinlichkeit angibt, dass eine Projektion eines des einen oder der mehreren Ziele auf die mit der Gruppe verknüpfte Ebene an einer oder mehreren Stellen der Ebene liegt, und
wobei das eine oder die mehreren Ziele mindestens eine Entität oder mindestens einen wesentlichen Teil einer Entität umfassen.

2. Verfahren nach Anspruch 1, wobei eines des einen oder der mehreren Ziele ein wesentlicher Korpusteil eines Roboters ist oder ein Wert eines Elements der Datendarstellung 3D-Raumkoordinaten eines Teils in der 3D-Szene, der durch das Element dargestellt wird, umfasst.

3. Verfahren nach Anspruch 1 oder 2, wobei mindestens eine der Verzweigungen (202, 203) einen Restblock umfasst.

4. Verfahren nach einem der Ansprüche 1 bis 3, wobei die 3D-Szene die Ziele umfasst und mindestens eine der Verzweigungen ferner eine finale Faltungsschicht umfasst, die eine Kanaldimension aufweist, die einer Anzahl der Ziele entspricht.

5. Verfahren nach einem der Ansprüche 1 bis 4, wobei die Datendarstellung ein Bild ist, der 3D-Raum ein Blickraum einer Bildaufnahmevorrichtung ist, und die verschiedenen Ebenen eine Bildebene der Bildaufnahmevorrichtung umfassen und eine Ebene umfassen, die eine Achse des Blickraums enthält, die senkrecht zu der Bildebene verläuft.

6. Deep-Neural-Network-Vorrichtung (200) für ein Computersystem, die dazu ausgestaltet ist, dreidimensionale (3D-) Raumkoordinaten eines jeden von einem oder mehreren Zielen in einer 3D-Szene auf der Grundlage probabilistischer Darstellungen, die jeweils zu einer anderen Gruppe probabilistischer Darstellungen gehören, vorherzusagen, wobei das auf einem Computer implementierte tiefe neuronale Netzwerk umfasst:

ein Backbone (201), das dazu ausgestaltet ist, Merkmale aus einer Datendarstellung der 3D-Szene abzuleiten, wobei das eine oder die mehreren Ziele mindestens eine Entität oder mindestens einen wesentlichen Teil einer Entität umfassen; und
Verzweigungen (202, 203), die mit dem Backbone (201) verbunden sind und dazu ausgestaltet sind, die Merkmale zu verarbeiten, um die verschiedenen Gruppen probabilistischer Darstellungen zu generieren, wobei jede der Verzweigungen (202, 203) eine oder mehrere Schichten umfasst, die einen anderen Satz von Gewichten umfassen, um eine der verschiedenen Gruppen aus den Merkmalen zu generieren,
wobei jede der Gruppen mit einer anderen Ebene eines 3D-Raums verknüpft ist, der die 3D-Szene umfasst, und eine oder mehrere probabilistische Darstellungen umfasst, und
wobei jede probabilistische Darstellung in jeder der Gruppen dazu ausgestaltet ist, eine Wahrscheinlichkeit anzugeben, dass eine Projektion eines des einen oder der mehreren Ziele auf die mit der Gruppe verknüpfte Ebene an einer oder mehreren Stellen der Ebene liegt.

7. Computersystem zum Schätzen einer oder mehrerer Stellen eines oder mehrerer Ziele, umfassend:

das tiefe neuronale Netzwerk (200) nach Anspruch 6; und

ein Vorhersagemodul (502), das dazu ausgestaltet ist, 3D-Raumkoordinaten jedes des einen oder der mehreren Ziele auf der Grundlage probabilistischer Darstellungen, die jeweils zu einer anderen der Gruppen gehören, vorherzusagen.

8. Computerimplementiertes Verfahren zum Trainieren des tiefen neuronalen Netzwerks (200) nach Anspruch 6, umfassend:
Eingeben (S606) von Merkmalen, die aus einer synthetischen Datendarstellung abgeleitet wurden, die Tiefeninformationen umfasst, oder von Merkmalen, die aus Datendarstellungen abgeleitet sind, die Bewegungen von Roboterarmen darstellen, in die Verzweigungen des tiefen neuronalen Netzwerks, um die Verzweigungen zu trainieren.

9. Verfahren nach Anspruch 8, ferner umfassend:
Generieren der synthetischen Datendarstellung durch Anwenden (S604) einer Datenaugmentierung auf eine Punktwolke, die aus einer anderen Datendarstellung berechnet wurde (S603), die Tiefeninformationen enthält.

10. Verfahren nach Anspruch 9, wobei die Datenaugmentierung umfasst:

Drehen der Punktwolke um eine Achse eines 3D-Koordinatensystems, in dem sich die Punktwolke befindet; und/oder
Verschieben der Punktwolke entlang zweier Achsen des 3D-Koordinatensystems.

11. Verfahren nach einem der Ansprüche 8-10, ferner umfassend:
Generieren der synthetischen Datendarstellung durch Einfügen (S602) von Rauschen oder einer Auslassung eines oder mehrerer Abschnitte in eine andere Datendarstellung, die Tiefeninformationen umfasst.

12. Computerimplementiertes Verfahren zum Entwickeln des tiefen neuronalen Netzwerks nach Anspruch 6, umfassend:

Trainieren des tiefen neuronalen Netzwerks unter Verwendung des Verfahrens nach einem der Ansprüche 8 bis 11; und
Bewerten der Leistung des tiefen neuronalen Netzwerks unter Verwendung von Merkmalen, die aus einer realen Datendarstellung abgeleitet sind, die Tiefeninformationen umfasst und aus einer realen Umgebung erfasst wird.

13. Computerlesbares Speichermedium, das das tiefe neuronale Netzwerk (200) nach Anspruch 6 speichert oder Instruktionen speichert, die, wenn sie durch einen oder mehrere Prozessoren (701) ausgeführt werden, den einen oder die mehreren Prozessoren (701) in die Lage versetzen, das Verfahren nach einem der Ansprüche 1 bis 5, das Verfahren nach einem der Ansprüche 8-11 oder das Verfahren nach Anspruch 12 zu implementieren.

## Revendications

1. Procédé mis en œuvre par ordinateur pour générer des représentations probabilistes, comprenant le fait de :

dériver, en utilisant une dorsale (201) d'un réseau neuronal profond (200), des caractéristiques provenant d'une représentation de données d'une scène en trois dimensions « 3D » comprenant une ou plusieurs cibles ;

traiter (S404), en utilisant des branches (202, 203) du réseau neuronal profond (200) qui sont reliées à la dorsale (201), les caractéristiques pour générer différents groupes de représentations probabilistes ; et

prédire (S405) des coordonnées spatiales 3D de chacune de la ou des cibles sur la base des représentations probabilistes appartenant chacune à un groupe différent parmi lesdits groupes,

chacune des branches (202, 203) comprenant une ou plusieurs couches qui comprennent un ensemble différent de poids pour générer un groupe des groupes différents à partir des caractéristiques,

chacun des groupes étant associé à un plan différent d'un espace 3D comprenant la scène 3D et comprenant une ou plusieurs représentations probabilistes,

chaque représentation probabiliste dans chacun des groupes indiquant une probabilité qu'une projection de l'une de la ou des cibles sur le plan associé au groupe se trouve dans un ou plusieurs emplacements du plan, et

les une ou plusieurs cibles comprenant au moins une entité ou au moins une partie clé d'une entité.

2. Procédé selon la revendication 1, selon lequel l'une de la ou des cibles est une partie corporelle clé d'un robot, ou une valeur d'un élément de la représentation de données comprend des coordonnées spatiales 3D d'une partie dans la scène 3D qui est représentée par l'élément.

3. Procédé selon la revendication 1 ou 2, selon lequel au moins une des branches (202, 203) comprend un bloc résiduel.

4. Procédé selon l'une quelconque des revendications 1 à 3, selon lequel la scène 3D comprend les cibles, et au moins une des branches comprend en outre une couche convolutive finale ayant une dimension de canal équivalente au nombre de cibles.

5. Procédé selon l'une quelconque des revendications 1 à 4, selon lequel la représentation de données est une image, l'espace 3D est un espace de vue d'un dispositif d'acquisition d'image, et les différents plans comprennent un plan d'image du dispositif d'acquisition d'image, et un plan contenant un axe de l'espace de vue qui est perpendiculaire au plan d'image.

6. Appareil de réseau neuronal profond (200) pour un système de calcul qui est configuré pour prédire des coordonnées spatiales tridimensionnelles « 3D » de chacune d'une ou plusieurs cibles dans une scène 3D sur la base de représentations probabilistes appartenant chacune à un groupe différent de représentations probabilistes, le réseau neuronal profond mis en œuvre sur un ordinateur comprenant :

une dorsale (201) configurée pour dériver des caractéristiques d'une représentation de données de la scène 3D, les une ou plusieurs cibles comprenant au moins une entité ou au moins une partie clé d'une entité ; et

des branches (202, 203) reliées à la dorsale (201), configurées pour traiter les caractéristiques pour générer les différents groupes de représentations probabilistes,

chacune des branches (202, 203) comprenant une ou plusieurs couches qui comprennent un ensemble différent de poids pour générer un des différents groupes à partir des caractéristiques,

chacun des groupes étant associé à un plan différent d'un espace 3D comprenant la scène 3D et comprenant une ou plusieurs représentations probabilistes, et

chaque représentation probabiliste dans chacun des groupes étant configurée pour indiquer une probabilité qu'une projection de l'une de la ou des cibles sur le plan associé au groupe se trouve dans un ou plusieurs emplacements du plan.

7. Système de calcul pour estimer un ou plusieurs emplacements d'une ou plusieurs cibles, comprenant :

le réseau neuronal profond (200) selon la revendication 6 ; et

un module de prédiction (502) configuré pour prédire des coordonnées spatiales 3D de chacune de la ou des cibles sur la base de représentations probabilistes appartenant chacune à un groupe différent parmi lesdits groupes.

**8.** Procédé mis en œuvre par ordinateur pour entraîner le réseau neuronal profond (200) selon la revendication 6, comprenant :
l'entrée (S606), dans les branches du réseau neuronal profond, de caractéristiques dérivées d'une représentation de données synthétique comprenant des données de profondeur, ou de caractéristiques dérivées de représentations de données représentant des mouvements de bras de robot, afin d'entraîner lesdites branches.

**9.** Procédé selon la revendication 8, comprenant en outre :
la génération de la représentation de données synthétique en appliquant (S604) une augmentation de données sur un nuage de points calculé (S603) à partir d'une autre représentation de données comprenant de l'information de profondeur.

**10.** Procédé selon la revendication 9, selon lequel l'augmentation de données comprend :

la rotation du nuage de points autour de l'un des axes d'un système de coordonnées 3D dans lequel se trouve le nuage de points ; et/ou
la translation du nuage de points le long de deux axes du système de coordonnées 3D.

**11.** Procédé selon l'une quelconque des revendications 8 à 10, comprenant en outre :
la génération de la représentation de données synthétique en introduisant (S602) du bruit ou une suppression d'une ou plusieurs portions dans une autre représentation de données comprenant des données de profondeur.

**12.** Procédé mis en œuvre par ordinateur pour développer le réseau neuronal profond selon la revendication 6, comprenant :

l'entraînement du réseau neuronal profond en utilisant le procédé selon l'une quelconque des revendications 8 à 11 ; et
l'évaluation de performance du réseau neuronal profond en utilisant des caractéristiques dérivées d'une représentation de données réelles qui comprend de l'information de profondeur et est acquise à partir d'un environnement réel.

**13.** Support de stockage lisible par ordinateur, stockant le réseau neuronal profond (200) selon la revendication 6, ou stockant des instructions qui, lorsqu'elles sont exécutées par un ou plusieurs processeurs (701), permettent à un ou plusieurs processeurs (701) de mettre en œuvre le procédé selon l'une quelconque des revendications 1 à 5, le procédé selon l'une quelconque des revendications 8 à 11, ou le procédé selon la revendication 12.

FIG.1

**FIG.2**

**FIG.3**

<u>400</u>

S401: depth map → XYZ image

S402: normalizing XYZ image

S403: backbone 201 extracting features from XYZ image

S404: branches 202 and 203 processing the extracted features separately to respectively generate *uv* and *uz* heat maps

S405: predicting 3D coordinates of each robot joint based on the *uv* and *uz* heat maps of the robot joint

# FIG.4

<u>500</u>

Preprocessing module
<u>501</u>

Deep neural network
<u>200</u>

Prediction module
<u>502</u>

# FIG.5

600

```
┌──────────┐
│   S601   │
└──────────┘
     │
     ▼
┌──────────┐
│   S602   │
└──────────┘
     │
     ▼
┌──────────┐
│   S603   │
└──────────┘
     │
     ▼
┌──────────┐
│   S604   │
└──────────┘
     │
     ▼
┌──────────┐
│   S605   │
└──────────┘
```

# FIG.6

700

```
┌────────────────────┐
│     Processor      │
│        701         │
└────────────────────┘

┌────────────────────┐
│      Memory        │
│        702         │
└────────────────────┘
```

703

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ALESSANDRO SIMONI et al.** Semi-Perspective Decoupled Heatmaps for 3D Robot Pose Estimation From Depth Maps. *IEEE Robotics and Automation Letters*, 2022, vol. 7, 11569-11576
- **KE SUN et al.** Deep High-Resolution Representation Learning for Human Pose Estimation. *2019 IEEE/CVF Conference on Computer Vision and Pattern Recognition (''CVPR)*
- **ALEJANDRO NEWELL et al.** Stacked Hourglass Networks for Human Pose Estimation. *European Conference on Computer Vision*, 2016
- **SEN YANG et al.** TransPose: Keypoint Localization via Transformer. *IEEE/CVF International Conference on Computer Vision (''ICCV)*, 2021
- **KUNCHANG LI et al.** UniFormer: Unified Transformer for Efficient Spatiotemporal Representation Learning. *arXiv:2201.04676*, 2022

- **KAIMING HE et al.** Deep residual learning for image recognition. *Proceedings of the IEEE conference on computer vision and pattern recognition*, 2016, 770-778
- **MYKHAYLO ANDRILUKA et al.** 2D Human Pose Estimation: New benchmark and state of the art analysis. *Proceedings of the IEEE Conference on computer Vision and Pattern Recognition*, 2014
- **YU XIANG et al.** PoseCNN: A Convolutional Neural Network for 6D Object Pose Estimation in Cluttered Scenes. *Robotics: Science and Systems*, 2018
- **TIMOTHY E. LEE et al.** Camera-to-robot pose estimation from a single image. *Proc. IEEE Int. Conf. Robot. Autom.*, 2020, 9426-9432